# EUROPEAN PATENT SPECIFICATION

(11) **EP 2 635 436 B1**
(45) Date of publication and mention of the grant of the patent: **20.03.2019**
(21) Application number: 11837639.1
(22) Date of filing: 07.11.2011
(51) Int. Cl.: B32B 27/10, D21H 27/32, E04C 2/24

(54) **COMPOSITE PRODUCT AND METHOD OF PRODUCING THE SAME**
VERBUNDPRODUKT UND VERFAHREN ZU SEINER HERSTELLUNG
PRODUIT COMPOSITE ET PROCÉDÉ DE FABRICATION ASSOCIÉ

(30) Priority: 05.11.2010 FI 20106169
(43) Date of publication of application: 11.09.2013
(73) Proprietor: Zeroboards Oy, 00250 Helsinki (FI)
(72) Inventor: NISKANEN, Kaarlo, FI-00250 Helsinki (FI)
(74) Representative: Seppo Laine Oy
(86) International application number: PCT/FI2011/050983
(87) International publication number: WO 2012/059652

(56) References cited:
- EP-A1- 0 042 716
- EP-A1- 0 044 617
- WO-A1-2007/093006
- DE-A1- 1 504 653
- GB-A- 117 111
- JP-A- 11 216 831
- JP-A- 2000 265 400

## Description

The present invention relates to a composite product, according to the preamble of Claim 1.

A product such as this comprises fibre and thermoplastic layers which are arranged alternately one upon the other and are attached to each other by the melting of the plastic layers.

The present invention also relates to a method according to the preamble of Claim 12 and to a use according to Claim 16 and a building element according to Claim 17.

Plywood generally comprises at least three thin layers of wood veneer which are cross-glued in order to form a board-like product. Depending on the wood species, the thickness of the veneer varies between approximately 1 and 2 mm, in which case the total thickness of the plywood boards is approximately 3-50 mm. Generally, plywood, especially hardwood plywood (birch plywood) has good mechanical properties and excellent dimensional stability.

Typical plywood applications are floor and wall structures and structural parts, concrete moulds, traffic signs and information boards, packings, bases of transport packing and means of transport, walls and roofs, and furniture and fixture parts.

Disadvantages of plywood boards include weight, which in many applications is considerable, and the need for tools for working it. The considerable weight arises from the fact that the number of cross-glued veneer layers is uneven. As a result of the weight, for instance the lowest nominal thicknesses of Finnish softwood plywood are 4 mm, 6.5 mm and 9 mm, and correspondingly, the lowest grammages are 2.1 kg/m², 3.4 kg/m² and 4.7 kg/m².

Working with plywood requires woodworking tools such as a saw. Because of splinters, safety gloves have to be used. The stiffness of plywood complicates the putting in position of pieces that have been cut, because the board is too rigid to be bent by hand. Furthermore, it is difficult to bend plywood into a shape which permanently differs from a planar surface. For this, a thorough moistening, a large compression load and a long compression time, are needed. These factors limit the use of plywood in packings, structures and fixtures. The wood cannot be recovered and recycled, instead, boards which are removed from service must be burnt, because of the glue contained in them. Generally, the adhesives used in plywood comprise substances which are harmful to health (formaldehyde).

Moreover, there are problems associated with the production of plywood. Only veneers made from high-quality, low-knotted wood raw material can be lathed, because the knots lead to holes in the veneer. These holes must be separately patched. Also, the wood material must be strong enough, because it would otherwise disintegrate during the production of the veneers. Furthermore, the production process requires expensive equipment which consumes much energy when the veneers are glued together under high pressure and temperature.

It is an aim of the present invention to generate a novel, health-friendly and easy-to-use composite product, specifically a composite product in the form of a board, which can be used in, for instance, packings, structures and furniture, in which case its mechanical properties are sufficient to allow it, in these applications, to at least partially replace traditional plywood boards.

Another purpose of the present invention is to generate a new method of producing such a composite product.

The invention is based on the principle that it is possible to produce an easy-to-use composite product, one possessing properties of good strength, from porous paper and cardboard layers and thermoplastic layers.

Methods of combining thermoplastic and wood fibres under conditions of heat and at a very high, up to 200 bar pressure, and in the presence of reactive additives, to produce board and profile products which are similar to impregnated wood, are already known. In these solutions, the fibres are generated from wood by grinding, in which case they are more or less equivalent to fibres of native wood. The product to be produced is not of a sandwich-type, instead it corresponds mainly to solid wood; approximately 80 parts by weight of the product are fibres, which are bound together with 20 parts by weight of thermoplastic.

Also known are methods in which shredded paper and thermoplastic are compressed together. Also known are methods in which a paper or cardboard layer is compressed onto one side or both sides of a product which is in the form of a board and which is made of thermoplastic and shredded paper (US 4 925 512).

Also known are methods in which a monomer is absorbed into a web, several webs are then compressed together and the monomer is hardened with UV light. Instead of a monomer, it is possible also to use absorbable water-soluble resins. However, the monomers and resins which are suitable for these methods are expensive and the products generated are hard and brittle.

Also, different sandwich-structures and reinforced corrugated cardboard products are described in the publications WO9709166 and US 4 409 274.

According to the present invention, a completely new composite product is generated from porous paper or cardboard layers and thermoplastic layers, especially uniform thermoplastic layers, by arranging the fibre and plastic layers alternating one upon the other and by compressing these layers together at an elevated temperature and at such a high pressure that the plastic layers melt and the molten plastic penetrates into the adjacent, porous layers, in which case zones are generated between the fibre layers and the plastic layers, which zones comprise both fibres and plastic.

The laminate product is prepared by arranging a sufficient number of fibre and plastic layers one upon the other, typically at least 4 fibre layers and 3 plastic layers, to render the product, after being compressed together under conditions of heat and pressure, self-supporting.

JP 2000265400 discloses a thermo-formable paperboard comprising alternating layers of paper and thermoplastic and JP 11216831 discloses a composite material comprising alternating layers of cut pieces of paper and thermoplastic resin. Neither of the references discloses fibre layers and the thermoplastic layers attached to each other by means of blend zones which contain fibres and plastic. EP 42 717 and EP 44617 disclose hot-pressed composite products which comprise alternating layers of fibre and thermoplastic one upon the other. Further related art is disclosed in DE 15 04 653, GB 117 111 and WO 2007/093006.

The present invention differs from the known technology in that it generates a product the mechanical properties of which are similar to the combination of tensile strength and flexural strength which is typical of plywood. These properties can be achieved by using paper or cardboard layers. The tensile strength and the tensile stiffness of these layers are much greater than is achievable by using thermoplastic to join together wood fibres or shredded paper. In the latter case, the composite material stretches most where the plastic is and only a small load is exerted on the fibres.

Because porous fibre layers are used instead of native fibres in the present invention, in the laminate compression it is not necessary to use high pressures, such as those described above, instead, low or at fairly high pressures (typically at maximum 20 bar) are sufficient to ensure a successful production. Contact chemicals are not used. The plastic layer has a toughening effect on the structure and, at the same time, it binds the fibre layers together.

The product according to the present invention can be used for instance as a structural part of building walls, floors or roofs, in packings, especially packings for industrial products, or in furniture and fixtures (for instance shop fittings and office furnishings), as well as in vehicles (for instance walls and roofs of trailers, and interior surfaces of caravans and boats). It is possible to compress the product into different shapes by applying heat. In more preferable applications, the product which forms the structural part is attached to another structural part by using a friction fixture, such as a screw, nail, clasp or rivet.

In other, more preferred applications, non-planar structures, such as preformed parts of fixtures, wall panels of caravans and boats and, for instance, packing boxes, are needed. More specifically, the method according to the present invention is characterized by what is stated in the characterizing part of Claim 1.

The method according to the present invention is, in turn, characterized by what is stated in the characterizing part of Claim 12, and the usage by what is stated in the characterizing part of Claim 16 and the building element by what is stated in the characterizing part of Claim 17.

Considerable advantages are achieved with the present invention. Thus, the present invention generates a paper or cardboard laminate, within which laminate thermoplastic layers are placed between a number of paper or cardboard layers, in which case hot compression of these layers, which are stacked alternately one upon the other, generates a structure which is sufficiently strong to render it self-supporting, despite it being laminar.

The present composite structure possesses both good tensile strength and tensile stiffness. In a similar manner to wooden boards, it also be worked and attached to other structures. Screws and nails, clasps or rivets or corresponding friction fixtures are particularly easy to attach to it. This laminate structure is more flexible than plywood, it withstands impacts and does not form sharp splinters when it breaks; it insulates against moisture, water and wind, however, it evens out variations in moisture.

Due to its properties, described above, the product is suitable for use in, among others, fixtures, vehicles, wooden packings and construction (building boards) and similar applications, in which different plywoods are currently used. It can be produced to be totally water-repellent, in which case it can replace "water plywood". By using printing methods which are known *per se*, it is possible to print different colours and figures on the surface layer of the product, and thus replace a separate surface treatment stage, which is needed when plywood is used.

Besides being usable for making boards, the present material can also be used in the production of beams and pillars, and columns and similar elongated structures, the longitudinal dimension of which is considerably greater than the width and the thickness (i.e. the length in the direction of the surface layers is at least 6 times greater than the cross-directional width or, correspondingly, the perpendicular thickness).

In applications where it is not possible to manufacture a box from corrugated cardboard (because it is not possible to achieve sufficient strength or long-term load-bearing capacity in conditions of varying moisture), such a box is often manufactured from plywood. However, the plywood boards forming the walls of the box must be attached to each other by means of special edge pieces, which may be made of wood, plastic or metal. By using the board according to the present invention it is possible to manufacture such a box without using edge pieces, because the board can be shaped, by applying heat, into the form of the box. This solution saves work and material. The above also applies to the production of other structures. Examples of those are furniture, parts of transportation equipment and other board structures which have corners or curved surfaces.

As described above, in a particularly interesting application, the present laminate is used either as a box/for the manufacturing of a box or as part of a box made of wood or plywood.

According to the present solution, the uniform (typically without any holes) plastic layers provide good moisture resistance to the laminate. In an example, a board 15 mm thick was manufactured, which board did not curve at all under conditions of varying ambient moisture content. In this respect, this board clearly differs from a plywood board. The dimensional stability properties which are achieved with the present solution probably result from, among others, external variations in moisture being unable to penetrate into the laminate, except very slowly through the outer edges, in which case the curving forces remain small.

It is also possible to carry out the bending by creasing the board in the same way as in the manufacture of a corrugated cardboard box. The example below describes how a rectangular slotted container is manufactured. The thickness of the laminate used in the manufacturing of such a box is most suitably approximately 1.5-5 mm, for instance approximately 2-3.5 mm. The stacking strength is good, generally at least as good as that of a corresponding box which is made of corrugated cardboard 1 to 3 times thicker. The dimensions of the box may vary widely: the height is generally approximately 10-2000 mm, for instance approximately 100-1000 mm; the width is approximately 10-2500 mm, for instance approximately 100-2000 mm; the length is approximately 10-3000 mm, for instance approximately 100-2000 mm. The stacking strength varies depending on the thickness of the board and the size of the box, but typically lies within the range of approximately 10-1000 kg, for instance approximately 100-400 kg.

The laminate is also suitable for production of die-cut blanks, especially die-cut box blanks. Other applications are transport and storage boxes, which currently are typically made of "kraft board", such as boxes designed for the fish industry and other boxes for the food industry, and boxes for agricultural products and building materials.

In the following, the present invention will be examined in more detail with the help of a detailed explanation.

The accompanying figures, 1-3, show the basic forms of the cross-sections, depicted from the side, of three alternative products.

As mentioned above, the product according to the present invention comprises alternating, fibre and thermoplastic layers one upon the other, which are attached to each other by means of interfaces/zones which comprise fibres and plastic.

The fibre layers of the product comprise porous paper or cardboard layers which make up the bulk of the weight of the product. Generally, these paper or cardboard layers are produced by separate webbing before they are used for producing the product according to the present invention. The webbing process can be carried out for instance by a paper or cardboard machine. During the webbing, an "internal stress state", which is generally known, is formed in the paper and cardboard, which state is essential to ensure that product has the required strength properties. Such a stress state, and thus strength properties of the final product, will not be achieved if wood fibres, wood powder, shredded paper or other lignocellulose-based pieces are dried together with thermoplastic pieces in such a way that the lignocellulosic pieces become attached to each other as a result of the thermoplastic pieces.

More preferably, these paper or cardboard layers comprise lignocellulosic fibres. These can be sourced from annual or perennial plants, however, most suitably from wood material, such as hardwood or softwood and mixtures thereof. In this case, the lignocellulosic raw material is refined using a method which is known *per se.* According to a preferred embodiment, the fibre layer comprises chemi-mechanical fibre pulp, such as NSSC pulp. Fluting cardboard is an example of such a fibre layer. It is also possible to use traditional chemical pulp, chemithermo-mechanical pulp (CTMP) and. case-specifically. also mechanical pulp, such as groundwood pulp (GW), pressure groundwood pulp (PGW) or thermomechanical pulp (TMP). After defibring, a layer, track or web is formed of the chemical, chemi-mechanical or mechanical pulp, preferably by means of a paper or cardboard machine. Besides defibred lignocelluloses, the web may comprise other components which are used in paper and cardboard making. The web may, in addition, comprise agents which facilitate the penetration and the adherence of the thermoplastic, and which are known *per se.* According to a preferred embodiment, at least part of the fibre layers are such that their lignin content, determined by the Klason method, is approximately 0-70 % by weight, of the total weight of the fibre layer, especially approximately 0-30 % by weight, most suitably approximately 8-16 % or 27-30 % by weight.

The lignin content facilitates the adherence of the fibre layers to the thermoplastic, because:
1. The surface energy value of lignin and especially the polar component and the dispersion component of the surface energy are closer to the corresponding values of plastics than of material that comprises carbohydrates (such as cellulose, hemicelluloses, and starch and its derivatives). It is generally known that when substances are spread across each other's surfaces, the closer their surface energies are to each other the better, and especially the closer the polar component of the surface energy and the dispersion component of the surface energy are. Consequently, softened or molten thermoplastic penetrates more easily into a lignin-bearing material than into material which comprises only carbohydrates.
2. The "softening temperature" of lignin is approximately 80-100 °C, depending on moisture content. The compression temperature used in the production of the product according to the present invention is higher than the temperature at which lignin softens. Consequently, the lignin and the lignin-bearing fibre network become soft under compression. This facilitates penetration of plastic in between the fibres and, in turn, its anchoring onto the surfaces of fibres that contain lignin.

Examples of preferred fibre layers are papers and cardboards (sheets and webs), the grammages of which are approximately 10-1000 g/m², such as approximately 50-500 g/m². The thickness of these is most suitably approximately 15-2500 µm, especially approximately 75-1250 µm.

A preferred fibre layer material is paper or cardboard, especially cardboard, which is made of mechanical or chemi-mechanical pulp. Part of the fibre layers can also be made totally or partly of chemical pulp.

The fibre layer which is closest to one or to both of the surfaces of the product can be designed with, for instance, colour and a pattern, as desired.

The fibre layer used is porous, which means that the fibre layer is at least partly capable of absorbing molten plastic in the compression stage, in which case the plastic in the plastic layer can penetrate into the adjacent fibre layers. Thus, when hot compression is used to manufacture the laminate, the plastic layer is melted, causing it to penetrate at least partly into the fibre layer.

In the case of the present invention, the porosity of the paper or cardboard is a ratio, which is known *per se,* between the thickness and the grammage, i.e. the "bulk". The porosity of the paper or cardboard, which is used in the product according to the present invention, is 1-4 cm³/g and preferably 1.5-2.5 cm³/g. The thickness of the paper is determined by applying the ISO 534 test.

The layers between the fibre layers are comprised of thermoplastic. The thermoplastic can be any polymer material which melts at a temperature which is below the ignition temperature of the fibre layer. In particular, the layers which are comprised of plastic are uniform and not air-permeable, i.e. in practice they have no holes in them.

Most suitably, the melting temperature of the thermoplastic is approximately 60-300 °C, especially approximately 70-260 °C, most suitably approximately 90-180 °C.

The thermoplastic layers comprise homopolymer, copolymer or terpolymer, for instance polyolefin, polyether, polyamide or polyester plastic, or acrylonitrile/butadiene/styrene copolymer (ABS), styrene/acrylonitrile copolymer (SAN) or polystyrene plastic, or polylactide acid (PLA) or other biodegradable thermoplastic, starch-based thermoplastic, or derivatives and mixtures of these (all the above mentioned). It is also possible to use other thermoplastics and mixtures thereof which are suitable for the purpose.

Especially, it is possible to use in the laminate polyethene (LDPE, MDPE or HDPE) or polypropylene or ethene/propene copolymer, polystyrene, polycarbonate, polyethylene terephthalate (PET), polybutylene terephthalate (PBT), polyethene naphthalate (PEN) or polyoxymethene (POM).

The polymer and its properties (among others, molar mass, molar mass distribution and melt flow properties) of the plastic layer are chosen depending on the application. In one application, the molar mass of the thermoplastic material varies within the range of 50,000-1,000,000 g/mol. Most suitably, the molar mass is approximately 10,000-500,000 g/mol, especially approximately 20 000-400 000 g/mol, more preferably approximately 50,000-300 000 g/mol. The melt flow of thermoplastic is, most suitably, great enough, at the compression pressure and temperature to which the board is subjected, to allow the plastic to penetrate into the adjacent fibre layers. In one embodiment, the melt flow of polyethene (MFI 2.16 kg) is most suitably within the range of approximately 2-30 g/10 min, especially approximately 5-25 g/10 min.

The plastic layer can comprise pure plastic or recycled plastic or a mixture thereof. From pure plastic or reprocessed plastic (for instance pelletized reprocessed plastic) it is possible to produce in a method which is known *per se,* for instance either blown films, or flat films by orifice-extrusion, which films are suitable for the present product. In this case, the laminate product can be produced continuously by feeding plastic film, either from a roll or from an orifice, in between the fibre layer webs. Especially, the plastic layer or film is uniform and has no holes, as described above.

The films can be oriented, for instance they can be oriented uniaxially or biaxially.

It is also possible to form a thermoplastic layer by melting plastic film or parts of plastic film or plastic granules between the fibre layers. The thermoplastic layer may comprise for instance shredded paper, wood powder or mineral pieces as filler. In addition, the thermoplastic layer may comprise metal.

Typically, the grammage of the thermoplastic layer is at least approximately 20 g/m²: in one embodiment for instance 20-60 g/m², in another embodiment the grammage is at least approximately 50 g/m², especially approximately 50-500 g/m² and most suitably approximately 100-200 g/m², or approximately 100-150 g/m². Generally, the total amount of plastic in the laminate structure is at least 100 g/m².

Most preferably, the total grammage of the plastic layers in a final product is at least 400 g/m². The thickness of the plastic layers in a final product is imprecise because the plastic penetrates at least partly into the fibre layer.

According to a preferable embodiment, the product comprises only alternating layers of fibre and thermoplastic, which are compressed together.
The product described above can be produced in such a way that several, preferably at least 4, most suitably at least 5 fibre layers, and several, most suitably at least 3, especially at least 4 thermoplastic layers, are arranged alternately one upon the other in order to form a laminated product, in which case the above-mentioned fibre layers comprise lignocellulosic fibres and the grammage of the plastic film is approximately 20-500 g/m², for instance 50-500 g/m²

The laminated product is compressed at a temperature which at least nearly corresponds to the glass transition point of thermoplastic, in order to at least partly melt the thermoplastic, and by applying a pressure which is especially approximately 0.1-100 bar, preferably approximately 1-50 bar and most suitably approximately 1-10 bar. The compression is continued until the plastic has at least partly penetrated into the adjacent fibre layers, in order to generate such a product which cannot be essentially delaminated without mechanically damaging the fibre layers. After that, the laminate/the composite product is allowed to cool.

The product can be continuously produced, in which case the compression can for instance be carried out in a continuous, heated roller press. It is also possible to carry out a discontinuous compression, in which case the desired fibre and plastic layers are arranged one upon the other in the heat press, after which the press is closed and heat and pressure are directed at the laminate structure until the structure has at least slightly collapsed after the plastic has melted and penetrated into the fibre layers.

According to a preferred embodiment, the product is produced by applying a single compression, i.e. by arranging all the layers of the laminate one upon the other and pressing them together in a single step. There is no separate glue in the product (no layers of glue) because the thermoplastic layers bind the fibre layers together.

Typically, the percentage of lignocellulosic fibres of the mass of the product is 50-95 % by weight, especially 50-90 % by weight, most preferably 50-80 % by weight, and the percentage of plastic of the mass of the product is approximately 50-80 % by weight, especially 10-50 % by weight and most preferably 20-50 % by weight. According to a preferred embodiment, the percentage of lignocellulosic fibres of the mass of the product is more than half.

According to a preferred embodiment, the grammages of the alternating layers are at least nearly equally large throughout the entire laminate. According to another embodiment, only the grammages of the fibre layers increase, or only the grammages of the plastic layers decrease, or the grammages of the fibre layers increase and the grammages of the thermoplastic layers decrease, when moving from the surface towards the middle of the laminate.

It is possible to arrange functional layers in the product, either on the surface or preferably below the surface layers. One possible functional layer is a layer which is electrically conductive or dissipative, which can be a layer or network that is comprised of, for instance, metal or a conductive carbon material. It is also possible to integrate conductive thermoplastic layers into the structure. Instead of these or besides these, the product can also comprise one or more layers of corrugated cardboard.

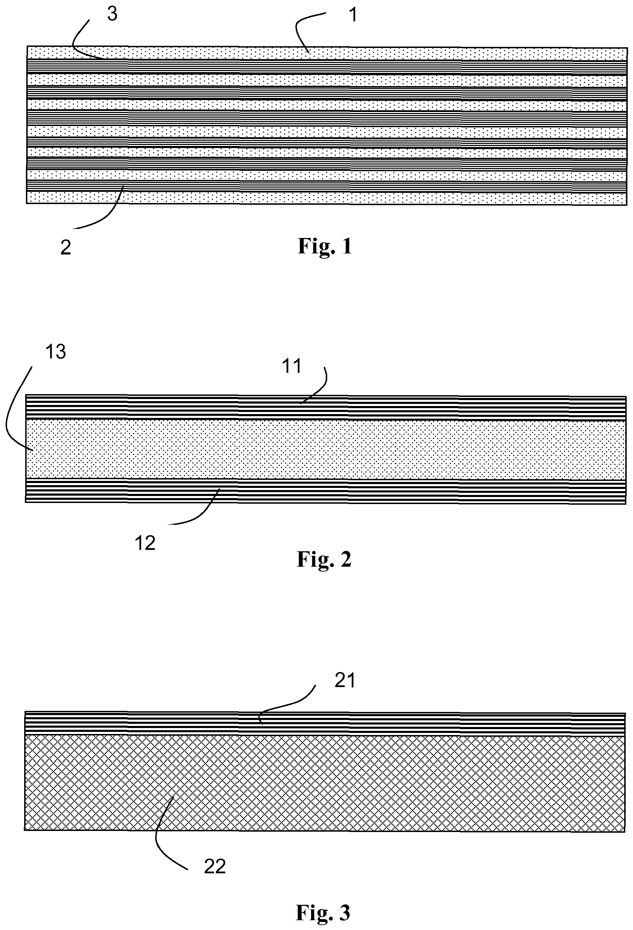

Figures 1-3 show three alternative structures, in which case figure 1 describes a laminate which is comprised of seven fibre layers 1 and six plastic layers 2, which are arranged between them. The laminate is self-supporting and the plastic toughens the structure. The zones 3 are formed between the fibre layers and the plastic layers, in which zones molten plastic penetrates into the fibre layer.

Figure 2 shows a cross-section of a laminate, in which a thicker layer is arranged between two laminate layers 11 and 12, which thicker layer, in this case, comprises a fibre layer 13 which is porous but retains a good bonding.

Figure 3, in turn, shows how a laminate is used as a stiff, shock-proof support layer 21 of a two-layer board, in which case for instance a heat or sound insulating layer is arranged on one side of the support layer, which insulating layer can be comprised of cellulose, corrugated cardboard, mineral wool, expanded polymer or a composite material 22 of thermoplastic and filler.

The board-like composite material is self-supporting when the span width is at least 50 cm, most suitably at least 75 cm, especially at least 100 cm (2-3 m). Here, "self-supporting" means that the structure will not break under its own weight, the span being as mentioned above.

In a preferred embodiment, the product has 5-30 fibre layers, especially approximately 7-15 fibre layers, and, correspondingly 4-29 thermoplastic layers, especially approximately 6-14 thermoplastic layers. In this case, the generated laminates are self-supporting, and they also possess mechanical properties that are essentially similar to those of plywood boards.

In one embodiment, the fibre layers form the surface of the product. In this case, it is easy to design the surfaces of the products as desired, for instance using colour and pattern. The fibre layer of the surface also prevents the laminate from adhering to the hot press during production.

In another embodiment, in which the surface of the product is intended to be resistant to moisture or water or to possess good resistance to wear, a polymer layer forms at least one surface of the product. If the fibre layer below the surface layer has been printed on, the plastic layer is most suitably transparent. In a preferred embodiment, the surface layer is formed of a plastic material different from that of the body structure itself, in which case it is possible to improve for instance the wear resistance of the surface by means of a high-quality polymer.

According to a preferred embodiment, the plastic layers used in the body part of the product (bulk part) are relatively thick (approximately 50-200 g/m², for instance 100-200 g/m²), which plastic layers are partly compressed into the fibre layers. Good resilience and shock resistance, and formability are achieved by means of thick plastic layers. By using relatively thick fibre layers it is possible to minimise the number of layers required for a certain thickness. A product which has very good mechanical properties and which can be produced economically is achieved with approximately 5-12, for instance 8-12 fibre layers.

In one embodiment, a product is generated, the thickness of which is approximately 1.8-2.3 mm and its longitudinal tensile strength is at least 80 kN/m and the transverse tensile strength is at least 50 kN/m.

In another embodiment, a product is generated, the thickness of which is approximately 4.2-5.5 mm and its longitudinal tensile strength is at least 200 kN/m and the transverse tensile strength is at least 80 kN/m.

From laminate it is possible to produce parts and pieces having desired shapes. However, boards which are planar and the dimensions of which can vary freely, are most commonly produced. Typically, the length of the board is, however, approximately 0.1-10 m, most suitably approximately 0.5-7.5 m, and its thickness is approximately 3-50 mm and width approximately 0.01-5 m, especially approximately 0.1-2 m.

From laminate it is also possible to produce pieces, the shapes of which differ from planar boards. Products having a desired shape can be produced for instance by preformation or a similar method. Examples of such products are curved boards, regularly or irregularly corrugated or folded boards, pieces having recesses or depressions in their surface, and three-dimensional products which are freely designed, such as chair seats.

The uses of laminates are described in more detail below. However, here it should be pointed out that according to a particularly interesting solution, a combination of building elements can be generated from laminates, which combination comprises at least an initial building element which, in turn, is attached to at least a single second building element, in order to generate a combination which is capable of withstanding mechanical forces without essentially losing its shape. In this case, the second building element is a product according to the present invention, and the first building element is attached to the second by a friction fixture, specifically a screw, nail or rivet fixture.

The laminate according to the present invention and a traditional plywood board are compared in the following example.

### Example:

A laminate was prepared from fluting cardboard and alternating lays of LDPE, which laminate comprised 10 cardboard layers and 9 plastic layers. The fluting cardboard was made from semi-chemical NSSC pulp. The thickness of the LDPE plastic was 200 µm. The laminate was hot-compressed between the plates of an ordinary hot-press at a temperature of 130 °C and at a pressure of approximately 50 bar, in which case the compression time was 10 minutes.

In this way, a laminate was prepared, the thickness of which was 2.9 mm. The laminate was compared with traditional wooden boards, and the results are shown in the table below:

**Table. Comparison of the properties of laminate and traditional wooden boards**

| | **2.9 mm laminate** | **3 mm hardboard** | **4 mm plywood** |
|---|---|---|---|
| Weight, kg/m² | 2.7 | 3.3 | 2.1 |
| Tensile strength, longit., kN/m | 136 | 57 | 62 * |
| Tensile strength, transvers., kN/m | 54 | 53 | 39 * |
| Bending stress, longit., MPa | 47 | 24 | 38 * |
| Bending stress, transvers., MPa | 23 | 21 | 6.0 * |
| Tensile modulus, longit., MPa | 4232 | 2639 | 7944 |
| Tensile modulus, transvers., MPa | 1301 | 2060 | 5056 |

| | | | |
|---|---|---|---|
| * 95 % of the measurement results exceed these values. All the other values are average values of the measurements. | | | |

The present board product is suitable for use as a structural part of building walls, floors or roofs, especially in base floors, sub-floors and in roof structures, in which the wind proofing and the moisture barrier can be replaced with a board product according to the present invention. Specifically, in this case the board can replace the underlay in pitched roof structures, which underlay is today generally plastic or cardboard and the installing of which is laborious or difficult. A special advantage of using the laminate in roof structures is that the whole structure can be stiffened with it, in which case it is possible to decrease the weight of the rafter frame arrangement.

According to another embodiment, instead of plywood, it is possible to use the board in packings for heavy products. Because the board can be cut with a utility knife, it is easier to work than plywood. Also, neither splinters nor sawdust are generated in the working. And fewer fasteners are required to attach the board when a friction fixture is used than are needed in the case of plywood.

Case-specifically, it is also possible to save costs of material, because the thickness of the manufactured board can be tailored exactly as desired, which is not the case with plywood. Also case-specifically, it is possible to avoid edge pieces, which are needed to fix plywood boards, because by applying heat the board can be shaped into the shape of a box.

According to a third embodiment, the board can be used in wall and roof structures of vehicles, such as trailers, caravans and boats, instead of either plywood or plastic profiles. The flexibility and shock resistance allow a lighter structure than when plywood is used. Compared with a plastic profile, the board may generate a comfortable surface, which is easy to design by using printing. Good wear resistance and water repellency are achieved for instance by wax treatment or by impregnating the surface layers with thermoplastic.

According to a fourth embodiment, it is possible to use the laminate in furniture and fixtures in the same applications as traditional fibreboards are currently used, especially hardboards (HDF boards), for instance back panels of closets. Thermoforming of boards also makes it possible to lighten the structure of furniture and fixtures, by replacing, for instance, supporting structures which are made from thick MDF boards with boards according to the present invention, which boards are shaped into angular forms.

According to a fifth embodiment, the laminate is used for producing boxes.

In one embodiment, such a box which is made from laminate may comprise two or more separate laminates, which are partly attached to each other, and which may be different, but both of which are consistent with the present technology.

In another case, it is also possible to use the laminate for instance as blank material for a box, which material after suitable shaping by die-cutting and creasing the edges where bending takes place, generate a box or part of a box by simple bending.

In a third solution, which can be combined with those described above, the boxes are prepared in a manner similar to producing corrugated cardboard boxes.

In one solution, an ordinary rectangular slotted container was prepared from laminate 2.3 mm thick. The length of the box was 600 mm, the width 400 mm and the height 300 mm. The box was able to withstand over 200 kg of uniform load without breaking.

In all of the above-mentioned applications, it is possible to utilise the favourable properties of the present invention, which, besides the mechanical properties described above, also include ease of use
- it can withstand bending into a curve, it does not snap and break,
- it is easy to work; it can be shaped with an utility knife (very thick boards may require a wood saw, if needed), no splinters are generated,
- it remains firmly in place: nails, screws and rivets hold in the plastic, and the board does not crumble even when vibrated, and
- the product is inexpensive to dispose of - it can be chopped up and burnt, it has a high energy content.

## Claims

1. A composite product, which comprises alternating layers of fibre and thermoplastic (1, 2) one upon the other
**characterized in that**
- the fibre layers (1) comprise porous paper or cardboard layers, which include lignocellulosic fibres and which form the main part of the mass of the product, and
- the fibre layers (1) and the thermoplastic layers (2) are attached to each other by means of blend zones (3) which contain fibres and plastic,
whereby
- the product comprises at least 5 fibre layers and at least 4 thermoplastic layers, and
- the number of the fibre and plastic layers (1, 2) is sufficient to provide a self-supporting product.

2. The product according to Claim 1, **characterized in that** the thermoplastic layers (2) are not situated in the surface of the product.

3. A product according to Claim 1 or 2, **characterized in that** the plastic layer (2) is melted onto the adjacent fibre layers (1) in such a way that it penetrates at least partly into the fibre layer.

4. A product according to any of the preceding claims, **characterized in that** the fibre layers (1) contain chemical fibre pulp, mechanical fibre pulp or semi-mechanical fibre pulp, and the thermoplastic layers (2) are of polyolefin, polyamide or polyester plastic, especially they are of polyethene or polypropene or polyterephthalate, and preferably the plastic layer (2) comprises a film, especially a uniform film without holes, which is comprised of plastic or recycled plastic.

5. A product according to any of the preceding claims, **characterized in that** the thickness of it (1, 2, 3) is approximately 1.8-2.3 mm and its longitudinal tensile strength is at least 80 kN/m and its transverse tensile strength is at least 50 kN/m, or the thickness of it is approximately 4.2-5.5 mm and its longitudinal tensile strength is at least 200 kN/m and its transverse tensile strength is at least 80 kN/m.

6. A product according to any of the preceding claims, **characterized in that** it comprises essentially only the above-mentioned fibre and thermoplastic layers,or it comprises a functional layer, for instance an electrically conductive layer, in order to generate a dissipative laminate, or it comprises one or more layers of corrugated cardboard.

7. A product according to any of the preceding claims, **characterized in that** the percentage of lignocellulosic fibres of the mass of the product is 20-95 % by weight, especially 50-90 % by weight and most suitably 50-80 % by weight, and the percentage of plastic of the mass of the product is approximately 5-80 % by weight, especially 10-50 % by weight and most suitably 20-50 % by weight.

8. A product according to any of the preceding claims, **characterized in that** the product comprises 5-30 fibre layers, especially approximately 7-15 fibre layers, and correspondingly, 4-29 thermoplastic layers, especially approximately 6-14 thermoplastic layers the grammage of the thermoplastic layers preferably being approximately 50 ...75-250 g/m².

9. A product according to any of the preceding claims, **characterized in that** the thicknesses of its layers, especially the fibre layers, are approximately 10-500 µm, especially approximately 50-250 µm, and preferably the thicknesses of the alternating layers, especially the alternating fibre layers, are at least nearly equally large, or the grammage of the alternating fibre layers increases when moving from the surface towards the middle of the laminate.

10. A product according to any of the preceding claims, **characterized in that** it is self-supporting when the span width is at least 50 cm, most suitably at least 75 cm, especially at least 100 cm (2-3 m).

11. A product according to any of the preceding claims, **characterized in that** its shape differs from a planar board.

12. A method of producing a product according to any of Claims 1-11, **characterized in that**
- at least 5 fibre layers (1) and 4 thermoplastic layers (2) are arranged alternately one upon the other in order to generate a laminated product, in which case the above-mentioned fibre layers comprise lignocellulosic fibres and the grammage of the plastic film is approximately 50-500 g/m²,
- the laminated product is compressed together at a temperature which at least nearly corresponds to the glass transition point of thermoplastic in order to at least partly melt the thermoplastic, and
- the compression is continued until the plastic at least partly penetrates into the adjacent fibre layers (3), in order to generate a product which cannot be essentially delaminated, without mechanically damaging the structural layers.

13. The method according to Claim 12, **characterized in that** the production of the composite product is continuous.

14. A method according to Claim 12 or 13, **characterized in that** the composite product is produced by feeding the plastic, either as film from a roll or as molten plastic from an orifice, in between the fibre layer webs.

15. A method according to any of Claims 12-14, **characterized in that** the plastic layers are generated either by melting plastic granules or from extruded plastic film.

16. Use of a product according to any of Claims 1-11,
- as a mounting platform for friction fixtures, especially screws, nails or clasps, or
- as a structural part of a wall, floor or roof, or
- as a furniture board or as part of a fixture or as a box, or part of a wooden box or of a box manufactured from plywood.

17. A building element combination which comprises at least an initial building element which, in turn, is attached to at least a single second building element, in order to generate a combination which is capable of withstanding mechanical forces without essentially losing its shape, **characterized in that** the second building element is a product according to any of Claims 1-11, and the first building element is attached to the second by a friction fixture, specifically a screw fixture.

## Patentansprüche

1. Verbundprodukt, das abwechselnd Schichten aus Faser und Thermoplast (1, 2) über der jeweils anderen umfasst,
**dadurch gekennzeichnet, dass**
- die Faserschichten (1) poröse Papier- oder Kartonschichten umfassen, die Lignocellulosefasern beinhalten und den Hauptteil der Masse des Produkts bilden, und
- die Faserschichten (1) und die thermoplastischen Schichten (2) über Mischzonen (3), die Fasern und Kunststoff enthalten, miteinander verbunden sind,
wobei
- das Produkt mindestens 5 Faserschichten und mindestens 4 thermoplastische Schichten umfasst, und
- die Anzahl der Faser- und Kunststoffschichten (1, 2) ausreichend ist, um ein selbsttragendes Produkt bereitzustellen.

2. Produkt nach Anspruch 1, **dadurch gekennzeichnet, dass** die thermoplastischen Schichten (2) nicht in der Oberfläche des Produkts angeordnet sind.

3. Produkt nach Anspruch 1 oder 2, **dadurch gekennzeichnet, dass** die Kunststoffschicht (2) auf die benachbarten Faserschichten (1) auf solch eine Weise aufgeschmolzen ist, dass sie zumindest teilweise in die Faserschicht eindringt.

4. Produkt nach einem der vorstehenden Ansprüche, **dadurch gekennzeichnet, dass** die Faserschichten (1) Chemiefaserpulpe, mechanische Faserpulpe oder halbmechanische Faserpulpe enthalten und die thermoplastischen Schichten (2) aus Polyolefin, Polyamid oder Polyesterkunststoff bestehen, insbesondere aus Polyethen oder Polypropylen oder Polyterephthalat, und vorzugsweise die Kunststoffschicht (2) eine Folie, insbesondere eine gleichmäßige Folie ohne Löcher, die aus Kunststoff oder recyceltem Kunststoff besteht, umfasst.

5. Produkt nach einem der vorstehenden Ansprüche, **dadurch gekennzeichnet, dass** die Dicke von diesem (1, 2, 3) annähernd 1,8 bis 2,3 mm und dessen Längszugfestigkeit mindestens 80 kN/m und dessen Querzugfestigkeit mindestens 50 kN/m oder dessen Dicke annähernd 4,2 bis 5,5 mm und dessen Längszugfestigkeit mindestens 200 kN/m und dessen Querzugfestigkeit mindestens 80 kN/m beträgt.

6. Produkt nach einem der vorstehenden Ansprüche, **dadurch gekennzeichnet, dass** es im Wesentlichen nur die oben genannten Faser- und Thermoplastschichten umfasst, oder dass es eine Funktionsschicht, beispielsweise eine elektrisch leitfähige Schicht, umfasst, um ein dissipatives Laminat zu erzeugen, oder dass es eine oder mehrere Schichten aus Wellpappe umfasst.

7. Produkt nach einem der vorstehenden Ansprüche, **dadurch gekennzeichnet, dass** der Prozentsatz der Lignocellulosefasern der Masse des Produkts 20 bis 95 Gew.-%, insbesondere 50 bis 90 Gew.-% und am geeignetsten 50 bis 80 Gew.-% beträgt und der Prozentsatz des Kunststoffs der Masse des Produkts annähernd 5 bis 80 Gew.-%, insbesondere 10 bis 50 Gew.-% und am geeignetsten 20 bis 50 Gew.-% beträgt.

8. Produkt nach einem der vorstehenden Ansprüche, **dadurch gekennzeichnet, dass** das Produkt 5 bis 30 Faserschichten, insbesondere annähernd 7 bis 15 Faserschichten, und entsprechend 4 bis 29 thermoplastische Schichten, insbesondere annähernd 6 bis 14 thermoplastische Schichten umfasst, wobei die Grammatur der thermoplastischen Schichten vorzugsweise annähernd 50 ... 75 bis 250 g/m² beträgt.

9. Produkt nach einem der vorstehenden Ansprüche, **dadurch gekennzeichnet, dass** die Dicken seiner Schichten, insbesondere der Faserschichten, annähernd 10 bis 500 µm, insbesondere annähernd 50 bis 250 µm, und vorzugsweise die Dicken der alternierenden Schichten, insbesondere der alternierenden Faserschichten, mindestens annähernd gleich groß sind oder das Flächengewicht der alternierenden Faserschichten zunimmt, wenn sie sich von der Oberfläche zur Mitte des Laminats bewegen.

10. Produkt nach einem der vorstehenden Ansprüche, **dadurch gekennzeichnet, dass** es selbsttragend ist, wenn die Spannweite mindestens 50 cm, am geeignetsten mindestens 75 cm, insbesondere mindestens 100 cm (2 bis 3 m) beträgt.

11. Produkt nach einem der vorstehenden Ansprüche, **dadurch gekennzeichnet, dass** sich dessen Form von einer ebenen Platte unterscheidet.

12. Verfahren zur Herstellung eines Produkts nach einem der Ansprüche 1 bis 11, **dadurch gekennzeichnet, dass**
- mindestens 5 Faserschichten (1) und 4 thermoplastische Schichten (2) abwechselnd über der jeweils anderen angeordnet sind, um ein laminiertes Produkt zu erzeugen, wobei in diesem Fall die oben genannten Faserschichten Lignocellulosefasern umfassen und die Grammatur der Kunststoffolie annähernd 50 bis 500 g/m² beträgt,
- das Verbundprodukt bei einer Temperatur, die zumindest näherungsweise dem Glasübergangspunkt von Thermoplast entspricht, komprimiert wird, um den Thermoplast zumindest teilweise zu schmelzen, und
- die Kompression fortgesetzt wird, bis der Kunststoff zumindest teilweise in die angrenzenden Faserschichten (3) eindringt, um ein Produkt zu erzeugen, das nicht wesentlich entlaminiert werden kann, ohne die Strukturschichten mechanisch zu beschädigen.

13. Verfahren nach Anspruch 12, **dadurch gekennzeichnet, dass** die Herstellung des Verbundproduktes kontinuierlich erfolgt.

14. Verfahren nach Anspruch 12 oder 13, **dadurch gekennzeichnet, dass** das Verbundprodukt durch Zuführen des Kunststoffs, entweder als Folie von einer Rolle oder als geschmolzener Kunststoff aus einer Öffnung, zwischen den Faserschichtbahnen hergestellt wird.

15. Verfahren nach einem der Ansprüche 12 bis 14, **dadurch gekennzeichnet, dass** die Kunststoffschichten entweder durch Schmelzen von Kunststoffgranulat oder aus extrudierter Kunststofffolie erzeugt werden.

16. Verwendung eines Produkts nach einem der Ansprüche 1 bis 11,
- als Montageplattform für Reibbefestigungen, insbesondere Schrauben, Nägel oder Klammern, oder
- als struktureller Teil einer Wand, eines Bodens oder eines Daches, oder
- als Möbelplatte oder als Teil einer Befestigung oder als Kasten, oder als Teil einer Holzkiste oder eines Kastens aus Sperrholz.

17. Bauelementkombination, die mindestens ein erstes Bauelement umfasst, das wiederum an mindestens einem einzigen zweiten Bauelement befestigt ist, um eine Kombination zu erzeugen, die in der Lage ist, mechanischen Kräften standzuhalten, ohne im Wesentlichen ihre Form zu verlieren, **dadurch gekennzeichnet, dass** das zweite Bauelement ein Produkt nach einem der Ansprüche 1 bis 11 ist und das erste Bauelement an dem zweiten durch eine Reibungsbefestigung, insbesondere eine Schraubbefestigung, angebracht ist.

## Revendications

1. Produit composite, qui comprend des couches alternées de fibre et de thermoplastique (1, 2) les unes sur les autres
**caractérisé en ce que**
- les couches de fibres (1) comprennent des couches de carton ou de papier poreux, qui incluent des fibres lignocellulosiques et qui forment la partie principale de la masse du produit, et
- les couches de fibres (1) et les couches de thermoplastique (2) sont attachées les unes aux autres au moyen de zones de mélange (3) qui contiennent des fibres et du plastique,
selon lequel
- le produit comprend au moins 5 couches de fibres et au moins 4 couches de thermoplastique, et
- le nombre de couches de fibres et de plastique (1, 2) est suffisant pour fournir un produit autoportant.

2. Produit selon la revendication 1, **caractérisé en ce que** les couches de thermoplastique (2) ne sont pas situées dans la surface du produit.

3. Produit selon la revendication 1 ou 2, **caractérisé en ce que** la couche de plastique (2) est fondue sur les couches de fibres (1) adjacentes de sorte qu'elle pénètre au moins en partie dans la couche de fibres.

4. Produit selon l'une quelconque des revendications précédentes, **caractérisé en ce que** les couches de fibres (1) contiennent de la pâte à fibres chimique, de la pâte à fibres mécanique ou de la pâte à fibres semi-mécanique, et les couches de thermoplastique (2) sont en plastique polyoléfine, polyamide ou polyester, en particulier elles sont en polyéthylène ou polypropène ou polytéréphtalate, et de préférence la couche de plastique (2) comprend un film, en particulier un film uniforme sans trous, qui se compose de plastique ou de plastique recyclé.

5. Produit selon l'une quelconque des revendications précédentes, **caractérisé en ce que** l'épaisseur de celui-ci (1, 2, 3) est environ de 1,8 - 2,3 mm et sa résistance à la traction longitudinale est au moins de 80 kN/m et sa résistance à la traction transversale est au moins de 50 kN/m, ou l'épaisseur de celui-ci est environ de 4,2 - 5,5 mm et sa résistance à la traction longitudinale est au moins de 200 kN/m et sa résistance à la traction transversale est au moins de 80 kN/m.

6. Produit selon l'une quelconque des revendications précédentes, **caractérisé en ce qu'**il comprend essentiellement seulement les couches de thermoplastique et de fibres susmentionnées, ou il comprend une couche fonctionnelle, par exemple une couche électroconductrice, afin de générer un stratifié dissipatif, ou il comprend une ou plusieurs couches de carton ondulé.

7. Produit selon l'une quelconque des revendications précédentes, **caractérisé en ce que** le pourcentage de fibres lignocellulosiques de la masse du produit est 20-95 % en poids, en particulier 50-90 % en poids et de manière plus appropriée 50-80 % en poids, et le pourcentage de plastique de la masse du produit est environ 5-80 % en poids, en particulier 10-50 % en poids, et de manière plus appropriée 20-50 % en poids.

8. Produit selon l'une quelconque des revendications précédentes, **caractérisé en ce que** le produit comprend 5-30 couches de fibres, en particulier environ 7-15 couches de fibres, et de manière correspondante, 4-29 couches de thermoplastique, en particulier environ 6-14 couches de thermoplastique, le grammage des couches de thermoplastique étant de préférence environ de 50...75 - 250 g/m².

9. Produit selon l'une quelconque des revendications précédentes, **caractérisé en ce que** les épaisseurs de ses couches, en particulier des couches de fibres, sont environ de 10-500 µm, en particulier environ de 50-250 µm, et de préférence les épaisseurs des couches alternées, en particulier des couches de fibres alternées, sont au moins presque aussi grandes, ou le grammage des couches de fibres alternées augmente en se déplaçant de la surface vers le milieu du stratifié.

10. Produit selon l'une quelconque des revendications précédentes, **caractérisé en ce qu'**il est autoportant lorsque la largeur d'envergure est d'au moins 50 cm, de manière plus appropriée d'au moins 75 cm, en particulier d'au moins 100 cm (2-3 m).

11. Produit selon l'une quelconque des revendications précédentes, **caractérisé en ce que** sa forme diffère d'un panneau plan.

12. Procédé de production d'un produit selon l'une quelconque des revendications 1-11,
**caractérisé en ce que**
- au moins 5 couches de fibres (1) et 4 couches de thermoplastique (2) sont agencées en alternance l'une sur l'autre afin de générer un produit stratifié, dans lequel cas les couches de fibres susmentionnées comprennent des fibres lignocellulosiques et le grammage du film plastique est d'environ 50-500 g/m²,
- le produit stratifié est comprimé ensemble à une température qui correspond au moins presque au point de transition vitreuse de thermoplastique afin de faire fondre au moins en partie le thermoplastique, et
- la compression est poursuivie jusqu'à ce que le plastique pénètre au moins en partie dans les couches de fibres adjacentes (3), afin de générer un produit qui ne peut pas être essentiellement destratifié, sans endommager mécaniquement les couches structurelles.

13. Procédé selon la revendication 12, **caractérisé en ce que** la production du produit composite est continue.

14. Procédé selon la revendication 12 ou 13, **caractérisé en ce que** le produit composite est produit par alimentation du plastique, soit en tant que film à partir d'un rouleau soit en tant que plastique fondu à partir d'un orifice, entre les bandes de couches de fibres.

15. Procédé selon l'une quelconque des revendications 12-14, **caractérisé en ce que** les couches de plastique sont générées soit par fusion de granulés de plastique soit à partir de film plastique extrudé.

16. Utilisation d'un produit selon l'une quelconque des revendications 1-11,
- en tant que plateforme de montage pour des fixations à friction, en particulier des vis, clous ou fermoirs, ou
- en tant que partie structurelle d'une paroi, d'un plancher ou d'un toit, ou
- en tant que panneau de meuble ou en tant que partie d'une fixation ou en tant que boîte, ou partie d'une boîte en bois ou d'une boîte fabriquée en contreplaqué.

17. Combinaison d'éléments de construction qui comprend au moins un élément de construction initial qui, à son tour, est attaché à au moins un deuxième élément de construction individuel, afin de générer une combinaison qui est capable de résister à des forces mécaniques sans perdre essentiellement sa forme, **caractérisé en ce que** le deuxième élément de construction est un produit selon l'une quelconque des revendications 1-11, et le premier élément de construction est attaché au deuxième par une fixation à friction, en particulier une fixation à vis.
